# EUROPÄISCHE PATENTSCHRIFT

(11) **EP 3 162 784 B1**
(45) Veröffentlichungstag und Bekanntmachung des Hinweises auf die Patenterteilung: **20.03.2019**
(21) Anmeldenummer: 15003090.6
(22) Anmeldetag: 29.10.2015
(51) Int. Cl.: C05F 3/00, C05F 11/08

(54) **VERFAHREN ZUR HERSTELLUNG VON BIOMASSEDÜNGER AUS IN DER GÜLLE ENTHALTENEN IONENLÖSUNGEN**
METHOD FOR THE PREPARATION OF BIOMASS FERTILIZER FROM ION SOLUTIONS CONTAINED IN THE LIQUID MANURE
PROCEDE DE FABRICATION D'ENGRAIS DE BIOMASSE A PARTIR DE SOLUTIONS IONIQUES CONTENANT DU LISIER

(43) Veröffentlichungstag der Anmeldung: 03.05.2017
(73) Patentinhaber: Gilhofer, Andree, 4170 Haslach (AT)
(72) Erfinder: Gilhofer, Andree, 4170 Haslach (AT)
(74) Vertreter: Landgraf, Elvira

(56) Entgegenhaltungen:
- WO-A1-80/02282
- DE-A1- 2 001 907
- US-A- 4 183 807
- US-A1- 2005 239 189
- US-A1- 2008 227 179

## Beschreibung

Die Erfindung betrifft ein Verfahren zur Herstellung von Biomassedünger aus Gülle von in der Landwirtschaft gehaltenen Tieren, wie Rind, Schwein, Schaf, Hühnern und dergleichen.

Gülle ist eine Mischung aus flüssigen und festen Ausscheidungsprodukten (Kot-Harn-Gemisch) von Tieren, die in der Landwirtschaft gehalten werden. Die Gülle wird gesammelt und häufig zur Düngung von Wiesen und Äckern ausgebracht, wobei es regelmäßig zu Geruchsbelästigungen kommt.

Gülle ist ein Produkt, das nahezu ausschließlich bei Stallhaltung entsteht, in der Natur und insbesondere bei Weidehaltung entsteht kein Gülle, da Kot- und Harnausscheidungen hier nicht gemischt werden.

Güllen enthalten im Allgemeinen über 90% ihrer Masse an Wasser und sind Mehrphasensysteme. Sie enthalten Salze, organische Verbindungen, unverdaute und halbverdaute Nahrungsbestandteile, Verdauungsprodukte, Magensäfte und Zellmasse von im Magen-Darm-Trakt gewachsenen Mikroorganismen.

Die Geruchsbelästigung der Gülle bzw. der unangenehme Geruch kommen vor allem durch die Ausgasung von Ammoniak aus den flüssigen Anteilen der Gülle zustande.

Die flüssige Phase der Gülle enthält außerdem eine hohe Konzentration von K⁺-Ionen, in Verbindung mit dem hohen Ammoniakgehalt kommt es häufig zu einem Überangebot an Ammonium- und K⁺-Ionen im Boden. Dadurch wird nicht nur die Bodenqualität nachhaltig negativ bis zur fortschreitenden Bodenerosion beeinflusst, sondern auch die Frucht bzw. die Pflanzen der Äcker und Wiesen enthalten dann oft ein Überangebot an Kalium im Grundfutter.

Pflanzenfutter, wie Heu und Silage, mit durch Gülledüngung bedingten hohen K⁺-Ionen-Gehalt verursacht bei Tieren zudem Probleme im Leber/Nieren-Stoffwechsel, insbesondere bei hoher Milchleistung.

Da landwirtschaftliche Güllen offensichtlich komplexe Gemische verschiedenster chemischer Substanzen und Mikroorganismen darstellen, finden in ihnen und in Wechselwirkung mit der umgebenden Gasatmosphäre bereits bei der Sammlung, Lagerung und allfälliger Nachbehandlung ständig chemische, physikalisch-chemische und biochemische Reaktionen statt, die sie in ihrer Zusammensetzung verändern. WO 80/02282 A1 beschreibt ein Verfahren zur Behandlung von Dung wobei Dung mit Wasser, Lactobacillus (Bakterien) und Kohlenhydrat, insbesondere Lactose, Fruktose, Galaktose, etc... gemischt wird.

Im Ganzen gesehen wirkt Gülledüngung auf dieselbe Weise wie künstliche handelsübliche Düngemittel, die chemisch hergestellt werden.

Aufgabe der Erfindung war es, ein Verfahren zur Aufarbeitung von landwirtschaftlicher Gülle bereitzustellen, bei dem die Mischung der Ausscheidungsprodukte der Tiere zu Biomassedünger verarbeitet werden, der pflanzenverträglich ist und keine Geruchsbelästigung darstellt
Gegenstand der Erfindung ist daher ein Verfahren zu Aufarbeitung von landwirtschaftlicher Gülle zur Erzeugung von Biomassedünger, gekennzeichnet durch folgende Verfahrensschritte:
a) Trennung des landwirtschaftlichen Güllegemisches durch mechanische Trennung wie Sieben (Gitterroste)oder Zentrifugieren von groben Fremdkörpern wie Stroh, von der im Wesentlichen flüssigen Phase
b) Zufügen von C-haltigen Stoffen, wie Mono - Di-, Oligo-. Polysacchariden, Brenztraubensäuren und Gluconodeltalacton und dergleichen zur flüssigen Phase,
c) Einbringung von Schimmelpilzen der Gattungen Aspergillus, Penicilium, Trichoderma oder Mucor und/oder Hefen und/oder Bakterien in die im Wesentlichen flüssige Phase des Güllegemisches,
wobei die in der im Wesentlichen flüssigen Phase der Gülle vorhandenen anorganischen Ionen insbesondere Ammoniumionen, Kaliumionen und Phosphationen durch die Schimmelpilze und/oder Hefen und/oder Bakterien in einer mikrobiologischen Reaktion bei einer Temperatur von 8 bis 35°C verstoffwechselt und in den entstehenden organischen Stickstoffverbindungen, wie Proteinen, Chitinen, Harnstoff und Phytin, organisch gebunden werden.

Wie bereits erwähnt, ist landwirtschaftliche Gülle ein Gemisch aus festen und flüssigen Ausscheidungsprodukten von Tieren. Dieses Gemisch wird vorerst in eine feste und eine im Wesentlichen flüssige Phase getrennt. Die Trennung kann durch zentrifugieren, filtrieren, sieben, abgießen und dergleichen erfolgen.

Die feste Phase kann problemlos ohne weitere Behandlung zur Düngung auf Wiesen und Äcker ausgebracht werden.

Die im Wesentlichen flüssige Phase allerdings weist, wie bereits oben angeführt einen hohen Gehalt an Ammonium- und Kalium-Ionen aus.

Durch das Ausgasen der Gülle, insbesondere durch Ammoniak und Stickoxiden im Boden geht jedoch auch wertvoller Stickstoff für die Düngung verloren. Außerdem ist das Ausgasen der Ammonium-Ionen in Form von Ammoniak und Lachgas im Boden hauptverantwortlich für die Geruchsbelästigung bei der Ausbringung von Gülle auf Wiesen und Felder zur Düngung.

Zudem sind die in der flüssigen Phase der Gülle in Form von Ionen vorliegenden Nährstoffe (wie K⁺, NH₄⁺ und PO₄⁺) nur bedingt geeignet zur Bodenverbesserung, da die Ionen die Krümelstrukturen des Bodens zerstören, wodurch die Mikroerosion des Bodens ausgelöst wird, welche sich in sichtbarer Form durch Wind/Wassererosion zeigt.

Der flüssigen Phase, die im Wesentlichen eine lonenlösung darstellt, werden erfindungsgemäß C-haltige Stoffe, wie Mono - Di-, Oligo-. Polysaccharide, Brenztraubensäure und Gluconodeltalacton zugefügt.

Beispiele für derartige Stoffe, die diese C-haltigen Verbindungen enthalten, sind etwa Rübenmelasse, Getreidemehlen, Zuckerrohrmelasse und dergleichen.

Üblicherweise weisen landwirtschaftliche Güllen in der im Wesentlichen flüssigen Phase einen pH Wert von etwa 6,5 - bis 8 auf. Dieser pH Wert der Gülle ist nicht unwesentlich abhängig von der Art der Fütterung der Tiere. Bei eiweißreicher oder zu eiweißreicher Fütterung liegt der pH-Wert im basischen Bereich also um Bereich > 7 bis 8, fallweise sogar darüber.
Es wurden fallweise auch schon pH-Werte von 9 bis 11 in Güllen gemessen.

Bei der Senkung des pH-Werts der im Wesentlichen flüssigen Phase der Gülle von einem Ausgangswert von üblicherweise > 6,5 auf einen pH-Wert etwa < 5,5 werden vorerst die Ureasen gehemmt, bzw. ganz blockiert, die für das Ausgasen der in der flüssigen Phase der Gülle vorhandenen Ammoniumverbindungen verantwortlich sind. Ureasen wandeln Ammoniumverbindungen, wie Harnstoff in Ammoniak um, der ausgast. Wird Ammoniak in Wasser gelöst entstehen Ammoniumionen und Hydroxidionen, die Ammoniumionen werden im Boden wieder zu Ammoniak umgewandelt. Dadurch entsteht einerseits die Geruchsbelästigung bei Ausbringen der Gülle, andererseits geht wertvoller Stickstoff für die Düngung des Bodens verloren. Werden die Ureasen gehemmt, wird die Umwandlung der Ammoniumverbindungen in Ammoniak verhindert. Die Senkung des pH-Werts erfolgt erfindungsgemäß durch das Einbringen von Schimmelpilzen und/oder Hefen und/oder Bakterien in die im Wesentlichen flüssige Phase der Gülle. Durch die durch die Schimmelpilze und/oder Hefen initiierte mikrobiologische Reaktion sinkt der pH-Wert üblicherweise auf unter etwa 5,5, was den Fortschritt der mikrobiologischen Reaktion begünstigt.

Geeignete Schimmelpilze sind jene der Gattungen Aspergillus, Penicillium, Mucor und Trichoderma.

Werden basentolerante Schimmelpilze eingesetzt, kann die Reaktion auch in einen höheren pH-Bereich ablaufen, beispielsweise im Bereich von pH 7 bis 8.

Geeignete Hefen sind Wildhefen, die aus der Milchsäurebiologie oder aus Kräutermischungen gewonnen werden können, sowie Erdhefen aus unterschiedlichsten Bodentypen und Bodenarten, wie Waldboden, Wiesenboden, Ackerboden und dergleichen.

Geeignete Bakterien sind beispielsweise Bakterienstämme, die in den Böden und auf Gesteinsoberflächen vorkommen, Kalibakterien und/oder Phosphorbakterien.

Je nach Zusammensetzung der im Wesentlichen flüssigen Phase der Gülle können die Schimmelpilze, Hefen und Bakterien einzeln oder in Kombination eingesetzt werden.
Es können auch Mischungen unterschiedlicher Schimmelpilze, Hefen und Bakterien eingesetzt werden.

Die mikrobiologische Reaktion verläuft endergon und wird durch die Schimmelpilze und/oder Hefen und/oder Bakterien in Gang gebracht, wobei die im Wesentlichen flüssige Phase der Gülle, die mit C-haltigen Verbindungen versetzt wurde, als Nährlösung für die mikrobiologische Reaktion dient.

Die mikrobiologische Reaktion läuft bei Temperaturen von 8 bis 35°C, vorzugsweise 12 bis 25°C ab.

Bei geringerer Temperatur sinkt die Reaktionsgeschwindigkeit, bei höherer Temperatur wird die Reaktion gehemmt.

Gegebenenfalls können durch metabolische Prozesse Teilreaktionen auch exergon ablaufen. Die Gesamtreaktion verläuft aber endergon.

Die Schimmelpilze und/oder Hefen und/oder Bakterien bewirken in einer mikrobiologischen Reaktion die Überführung von Ammonium- und Kaliumionen in eine organische gebundene Form, die sowohl boden- als auch pflanzenverträglich ist. Es werden also ionare Strukturen in organische Verbindungen übergeführt.

Im Wesentlichen werden durch die mikrobiologische Reaktion organische Stickstoffverbindungen, wie Proteine, Chitin, Harnstoff, Phytin und dergleichen gebildet.

Die Nährstoffe in den organischen N-Verbindungen der nun auf diese Weise erzeugten Biomasse werden direkt in verwertbarer Form auf bzw. in den Boden eingebracht.

Die organischen N-Verbindungen bzw. die mikrobiell gebildete Biomasse verhindern ein rasches Ausgasen in Form von NH₃ und Stickoxiden, wie z.B. Lachgas, da die organischen Verbindungen bzw. die mikrobielle Biomasse durch die Bodenbiologie zu Naturhumus und Dauerhumus umgebaut wird. Dadurch wird auch die Geruchsbelästigung stark vermindert und sogar nahezu gänzlich vermieden.

Naturhumus und Dauerhumus gewährleisten zudem die optimale natürliche Ernährung der, auf einem derart behandelten Boden, wachsenden Pflanzen.

Durch den Einbau und die Umwandlung der freien Ammonium-Ionen in die organisch gebundene Form kann Ammoniak nicht mehr ausgasen, die Geruchsbelästigung sinkt, der Verlust an wertvollem Stickstoff für die Düngung wird minimiert und steht für die Naturhumus- und Dauerhumus bildenden Reaktionen und Prozesse im Boden zur Verfügung.

## Patentansprüche

1. Verfahren zu Aufarbeitung von landwirtschaftlicher Gülle zur Erzeugung von Biomassedünger, **gekennzeichnet durch** folgende Verfahrensschritte:
a) Trennung des landwirtschaftlichen Güllegemisches durch mechanische Trennung wie Sieben (Gitterroste) oder Zentrifugieren von groben Fremdkörpern wie Stroh, von der im Wesentlichen flüssigen Phase
b) Zufügen von C-haltigen Stoffen, wie Mono - Di-, Oligo-. Polysacchariden, Brenztraubensäuren und Gluconodeltalacton und dergleichen zur flüssigen Phase,
c) Einbringung von Schimmelpilzen der Gattungen Aspergillus, Penicillium, Trichoderma oder Mucor und Hefen und/oder Bakterien in die im Wesentlichen flüssige Phase des Güllegemisches,
wobei die in der im Wesentlichen flüssigen Phase der Gülle vorhandenen anorganischen Ionen, insbesondere Ammoniumionen, Kaliumionen und Phosphationen durch die Schimmelpilze und Hefen und/oder Bakterien in einer mikrobiologischen endergonen Reaktion bei einer Temperatur von 8 bis 35 °C verstoffwechselt und in den entstehenden organischen Stickstoffverbindungen, wie Proteinen, Chitinen, Harnstoff und Phytin, organisch gebunden werden.

2. Verfahren nach Anspruch 1, **dadurch gekennzeichnet, dass** als Hefen Wildhefen aus der Milchsäurebiologie oder aus Kräutermischungen aus dem Erdmaterial unterschiedlicher Bodentypen und Bodenarten, (Waldboden, Wiese, Weide) eingesetzt werden.

3. Verfahren nach einem der Ansprüche 1 oder 2, **dadurch gekennzeichnet, dass** als Bakterien Bakterienstämme, die in den Böden und auf Gesteinsoberflächen vorkommen, insbesondere Kalibakterien oder Phosphorbakterien, eingesetzt werden.

4. Verfahren nach einem der Ansprüche 1 bis 3, **dadurch gekennzeichnet, dass** Schimmelpilze, Hefen und Bakterien in Kombination eingesetzt werden.

5. Verfahren nach einem der Ansprüche 1 bis 4, **dadurch gekennzeichnet, dass** Mischungen von Schimmelpilzen, Hefen bzw. Bakterien eingesetzt werden.

6. Verfahren nach einem der Ansprüche 1 bis 5, **dadurch gekennzeichnet, dass** die mikrobiologische Reaktion bei Temperaturen von 12 bis 25°C abläuft.

7. Verfahren nach einem der Ansprüche 1 bis 6, **dadurch gekennzeichnet, dass** die mikrobiologische Reaktion bei einem pH-Wert >5,5 abläuft.

8. Verfahren nach einem der Ansprüche 1 bis 7, **dadurch gekennzeichnet, dass** die mikrobiologische Reaktion bei Verwendung basentoleranter Schimmelpilze in einem pH-Bereich von 7 bis 8 abläuft.

## Claims

1. Method for processing agricultural slurry for generating biomass fertilizer, **characterized by** the following method steps:
a) separating the agricultural slurry mixture by mechanical separation, such as sieving (grates) or centrifugation, of coarse foreign bodies, such as straw, from the substantially liquid phase,
b) adding carbon-containing substances, such as monosaccharides, disaccharides, oligosaccharides, polysaccharides, pyruvic acids and glucono delta-lactone and the like, to the liquid phase,
c) introducing moulds of the genera Aspergillus, Penicillium, Trichoderma or Mucor and yeasts and/or bacteria into the substantially liquid phase of the slurry mixture,
wherein the inorganic ions present in the substantially liquid phase of the slurry, more particularly ammonium ions, potassium ions and phosphate ions, are metabolized by the moulds and yeasts and/or bacteria in a microbiological endergonic reaction at a temperature of from 8 to 35°C and organically bound in the resulting organic nitrogen compounds, such as proteins, chitins, urea and phytin.

2. Method according to Claim 1, **characterized in that** the yeasts used are wild yeasts from lactic acid biology or from herb mixtures from soil material of different soil types and soil textures (forest soil, meadow, pasture).

3. Method according to either of Claims 1 and 2, **characterized in that** the bacteria used are bacteria strains which occur in soils and on rock surfaces, more particularly potash bacteria or phosphorus bacteria.

4. Method according to any of Claims 1 to 3, **characterized in that** moulds, yeasts and bacteria are used in combination.

5. Method according to any of Claims 1 to 4, **characterized in that** mixtures of moulds, yeasts and/or bacteria are used.

6. Method according to any of Claims 1 to 5, **characterized in that** the microbiological reaction proceeds at temperatures of from 12 to 25°C.

7. Method according to any of Claims 1 to 6, **characterized in that** the microbiological reaction proceeds at a pH of > 5.5.

8. Method according to any of Claims 1 to 7, **characterized in that** the microbiological reaction proceeds within a pH range of from 7 to 8 when using base-tolerant moulds.

## Revendications

1. Procédé de traitement de lisier agricole pour la production d'engrais de biomasse, **caractérisé par** les étapes de procédé suivantes :
a) Séparation du mélange de lisier agricole par séparation mécanique, comme un criblage (caillebotis) ou une centrifugation de corps étrangers grossiers, comme de la paille, à partir de la phase essentiellement liquide,
b) Ajout de substances contenant du C, comme des mono-, di-, oligo-, polysaccharides, des acides pyruviques et de la glucono-delta-lactone et analogues, à la phase liquide,
c) Introduction de moisissures des genres Aspergillus, Penicillium, Trichoderma ou Mucor et de levures et/ou de bactéries dans la phase essentiellement liquide du mélange de lisier,
dans lequel les ions inorganiques présents dans la phase essentiellement liquide du lisier, en particulier les ions ammonium, les ions potassium et les ions phosphate, sont métabolisés via les moisissures et les levures et/ou bactéries, dans une réaction endoergique microbiologique à une température de 8 à 35 °C et sont liés de manière organique dans les composés azotés organiques résultants, comme des protéines, des chitines, de l'urée et de la phytine.

2. Procédé selon la revendication 1, **caractérisé en ce qu'**en tant que levures sont utilisés des levures indigènes issues de la biologie de l'acide lactique ou des mélanges d'herbes de types de sol et genres de sol qui diffèrent en ce qui concerne la terre (sol forestier, prairie, pâturage).

3. Procédé selon l'une des revendications 1 ou 2, **caractérisé en ce qu'**en tant que bactéries sont utilisées des souches bactériennes présentes dans les sols et à la surface des roches, en particulier les bactéries de potassium ou de phosphore.

4. Procédé selon l'une des revendications 1 à 3, **caractérisé en ce que** des moisissures, des levures et des bactéries sont utilisées en combinaison.

5. Procédé selon l'une des revendications 1 à 4, **caractérisé en ce que** des mélanges de moisissures, de levures ou de bactéries sont utilisés.

6. Procédé selon l'une des revendications 1 à 5, **caractérisé en ce que** la réaction microbiologique se déroule à des températures de 12 à 25 °C.

7. Procédé selon l'une des revendications 1 à 6, **caractérisé en ce que** la réaction microbiologique se déroule à un pH > 5,5.

8. Procédé selon l'une des revendications 1 à 7, **caractérisé en ce que** la réaction microbiologique se déroule dans une plage de pH de 7 à 8 en utilisant des moisissures tolérantes aux bases.
